Europäisches Patentamt

European Patent Office

Office européen des brevets

(19)

(11) **EP 0 823 620 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.[7]: **G01K 15/00**, H05B 3/74

(21) Anmeldenummer: **97111283.4**

(22) Anmeldetag: **04.07.1997**

(54) **Verfahren zum Kalibrieren von Temperaturmesswiderständen auf Trägern aus Glas, Glaskeramik oder dergleichen**

Method for calibrating temperature measuring resistances on substrates of glass, glass-ceramic or similar

Méthode pour calibrer des résistances de mesure de la température sur un support en verre, en céramique de verre ou analogue

(84) Benannte Vertragsstaaten:
**CH DE ES FR GB IT LI SE**

(30) Priorität: **09.08.1996 DE 19632057**

(43) Veröffentlichungstag der Anmeldung:
**11.02.1998 Patentblatt 1998/07**

(73) Patentinhaber:
• **Schott Glaswerke**
**55122 Mainz (DE)**
Benannte Vertragsstaaten:
**CH LI DE ES FR IT SE**
• **Carl Zeiss Stiftung Trading as Schott Glaswerke**
**55122 Mainz (DE)**
Benannte Vertragsstaaten:
**GB**

(72) Erfinder:
• **Schaupert, Kurt, Dr.**
**65719 Hofheim (DE)**
• **Engelmann, Harry**
**55411 Bingen (DE)**

(56) Entgegenhaltungen:
**EP-A- 0 467 133**   **EP-A- 0 651 237**
**DE-A- 3 145 333**

## Beschreibung

Die Erfindung betrifft ein Verfahren zum Kalibrieren von Temperaturmeßwiderständen auf Trägern aus Glas, Glaskeramik oder dergleichen, insbesondere von Leiterbahnwiderständen auf Kochflächen aus Glaskeramik.

Zur Verbesserung der Gebrauchstauglichkeit von Kochgeräten mit Glaskeramik-Kochfläche ist es wünschenswert, die Temperatur in der Kochzone zu messen und anzuzeigen oder zur Steuerung des Kochvorganges zu benutzen. Hierzu kann man beispielsweise Leiterbahnen auf der Unterseite der Kochfläche im Bereich der Kochzonen aufbringen und den temperaturabhängigen Widerstand (Temperaturmeßwiderstand) des Leiterbahnmateriales ausnutzen. Das System ist für elektrisch oder mit Gas beheizte Kochgeräte sowie u.a. auch Grillgeräte anwendbar. Als Leiterbahnmaterialien werden bei hohen Betriebstemperaturen bevorzugt Edelmetalle (Gold, Platin) verwendet, bei niedriger Maximaltemperatur (unter 400 °C ist auch Silber verwendbar. Diese Art der Temperaturmessung ist beispielsweise in DE 40 22 845 C2 beschrieben.

Bei den üblicherweise verwendeten Leiterbahnmaterialien steigt der elektrische Widerstand i.a. annähernd linear mit der Temperatur an und ist im gesamten interessierenden Temperaturbereich mit elektronischen Mitteln gut auswertbar.

Nachteilig ist jedoch, daß Temperaturmeßwiderstände der genannten Art bei praxisüblichem Gebrauch einer Alterung unterliegen. Hierdurch kann sich die Temperatur-Widerstands-Charakteristik des Temperaturmeßwiderstandes in erheblichem Maße ändern:

Typisch ist beispielsweise bei Verwendung von Gold als Leiterbahnmaterial eine Änderung des Temperaturmeßwiderstandes durch Alterung während einer für Kochflächen üblichen Betriebsdauer von ca. 2000 h bei einer üblichen Betriebstemperatur von ca. 600 °C von 14 auf 15 Ω bei einer Temperatur von 20 °C ($R_{20}$). Durch die Alterung von $R_{20}$ von 14 auf 15 Ω wird beispielsweise der vorher 20 °C entsprechende Widerstand von 14 Ω bereits bei -8 °C gemessen. Der einer Temperatur von 50 °C entsprechende Widerstand von 15,01 Ω wird bereits bei 20,3 °C und der einer Temperatur von vorher 400 °C entsprechende Widerstand von 26,77 Ω bereits bei 347 °C erreicht. Letzteres entspricht einer Mißweisung der Temperaturanzeige von immerhin 29,7 bzw. 53 Grad. Weiterhin können auch Fertigungstoleranzen bei der Herstellung von Leiterbahnwiderständen zu Abweichungen in den oben genannten Größenordnungen führen.

Aufgabe der Erfindung ist, ein Verfahren zum Kalibrieren der oben beschriebenen Temperaturmeßwiderstände bereitzustellen, das der fertigungs- und/oder alterungsbedingten Mißweisung in der Temperaturanzeige Rechnung trägt.

Diese Aufgabe wird mit einem Verfahren mit allen Merkmalen des Anspruchs 1 gelöst.

Die Erfindung macht sich die Tatsache zunutze, daß bei Trägern aus Glas, Glaskeramik oder dergleichen prinzipiell auch der elektrische Widerstand des Trägermaterials zur Temperaturmessung geeignet ist, wenn auch i.a. erst bei höheren Temperaturen. "Vergleichbares Material" bedeutet im Sinne der vorliegenden Erfindung jedes Material, das eine mit Glas oder Glaskeramik vergleichbare Temperatur-Widerstands-Charakteristik hat. Hier sind z. B. technische Keramiken und Kristalle, wie Glimmer und Quarz, zu nennen.

Nachfolgend wird die Erfindung ohne Beschränkung der Allgemeinheit am Beispiel eines Leiterbahnwiderstandes, der auf eine Glaskeramikkochfläche aufgebracht ist, erläutert. Der Leiterbahnwiderstand stellt dabei den Temperaturmeßwiderstand dar. Es liegt jedoch auf der Hand, daß die vorliegende Erfindung nicht nur auf Leiterbahnwiderstände auf Glaskeramikkochflächen anwendbar ist. Auch andere Anwendungsmöglichkeiten sind von großem Interesse. So ist z. B. auch bei Produkten mit Glaskomponenten, wie z. B. Backofentüren mit Glasscheiben eine Temperaturüberwachung (z. B. während eines Pyrolysevorgangs) besonders wünschenswert. Die Innentemperatur des Backofens beim Pyrolysevorgang von typischerweise 500 °C führt nämlich zu einer Scheibentemperatur bis über 300 °C, die nahe der Belastungsgrenze der Scheibe liegt. Durch eine Überwachung der Scheibentemperatur könnte eine themisch bedingte Zerstörung der Scheibe vermieden werden.

Die Verwendung von Glaskeramiktemperaturmeßwiderständen zur Temperaturmessung bei Kochgeräten mit Glaskeramikkochflächen ist bekannt und beispielsweise in DE 21 39 828 C und DE 40 22 846 C2 beschrieben. Üblicherweise werden hierzu auf der Unterseite der Glaskeramikkochfläche im Bereich der Kochzonen längs eines Halbmessers parallele Leiterbahnen aufgebracht, die den dazwischenliegenden streifenförmigen Glaskeramiktemperaturmeßwiderstand begrenzen und kontaktieren. Auch andere geometrische Ausgestaltungen eines solchen Glaskeramiktemperaturmeßwiderstandes sind bereits bekannt und z. B. in DE 40 22 846 C2 und DE 40 22 844 C1 beschrieben.

Der Zusammenhang zwischen der Temperatur $T_{GK}$ der Glaskeramik und dem Widerstand $R_{GK}$ des Glaskeramik-Sensors wird durch eine Gleichung der Form

$$(1) \quad T_{GK} = - B / (\lg (R_{GK}) + A))$$

mit den für die jeweilige Geometrie des Sensors und die Glaskeramik charakteristischen Konstanten A und B beschrieben.

Nachteilig an einem Glaskeramiktemperaturmeßwiderstand der beschriebenen Art ist, daß er mit fallender Temperatur exponentiell ansteigt und bei Temperaturen unter 250 °C bereits so hoch ist, daß er mit den üblichen elektronischen Mitteln nicht mehr auswertbar ist. Allerdings ist der elektrische Widerstand einer Glaskeramik oder eines Glases im Gegensatz zu Leiterbahnwiderständen sehr stabil gegenüber Alterungserscheinungen im Gebrauch. Auch sind fertigungsbedingte Schwankungen der Widerstandswerte weitgehend zu vernachlässigen. Typischerweise liegt bei einer Glaskeramikkochfläche bei den obigen Betriebsdaten (Dauer, Temperatur) die Mißweisung in der Anzeige eines Glaskeramiktemperaturmeßwiderstandes bei nur ca. 3 Grad. Der Glaskeramiktemperaturmeßwiderstand ist damit hervorragend als Referenzgröße zur Kalibrierung des Leiterbahntemperaturmeßwiderstandes geeignet.

Gemäß der Erfindung wird daher die Temperaturanzeige aus dem (alternden bzw. durch die Fertigung veränderten) Leiterbahntemperaturmeßwiderstand mit der Temperaturanzeige aus dem (weitgehend stabilen) Glaskeramiktemperaturmeßwiderstand kalibriert. Dies findet in der Auswerteelektronik statt.

Die Kalibrierung wird in der Regel bei Temperaturen zwischen 250 °C und 600 °C durchgeführt. Unterhalb von 250 °C ist der Glaskeramiktemperaturmeßwiderstand nicht mehr ohne weiteres auswertbar, oberhalb von 600 °C endet der Arbeitsbereich von Kochgeräten. Prinzipiell ist das Verfahren bis zur Belastungsgrenze der Glaskeramik von 750 °C einsetzbar.

Im folgenden werden die physikalischen Grundlagen für die praktische Durchführung des Kalibrier-Verfahrens beschrieben:

Bei Verwendung eines Leiterbahnmaterials mit weitgehend linearer Temperatur-Widerstands-Charakteristik, z. B. bei Gold oder Platin, wird der Zusammenhang zwischen der Temperatur $T_{LB}$ der Leiterbahn und dem Widerstand der Leiterbahn $R_{LB}$ durch eine Gleichung der Form

$$(2)\ R_{LB} = R_{20} * (1 + \alpha_{20} * (T_{LB} - 20))$$

bzw.

$$(3)\ R_{20} = R_{LB} / (1 + \alpha_{20} * (T_{LB} - 20))$$

oder

$$(4)\ T_{LB} = ((R_{LB} - R_{20}) / (R_{20} * \alpha_{20})) + 20$$

beschrieben, wobei $R_{20}$ der Widerstand der Leiterbahn bei 20 °C und $\alpha_{20}$ der Widerstandsbeiwert bei 20 °C ist. Die Werte werden auf 20 °C bezogen, da der Widerstandsbeiwert $\alpha_{20}$ üblicherweise in der Literatur auf 20 °C bezogen wird. Der obige Zusammenhang gilt jedoch sinngemäß für jede andere Referenztemperatur.

Ist der Widerstand nicht linear mit der Temperatur veränderlich, kann die Temperatur-Widerstands-Charakteristik allgemein durch ein Polynom

$$(5)\ R_{LB} = R_{20} * (1 + \alpha_{20} * (T_{LB} - 20) + \beta_{20} * (T_{LB} - 20)^2 + \delta_{20} * (T_{LB} - 20)^3 + ...)$$

dargestellt werden.

Im praktischen Gebrauch unterliegen $R_{20}$ und bei hohen Anforderungen auch $\alpha_{20}$ (und ggf. $\beta_{20}$ und $\delta_{20}$ usw.) den oben geschilderten Abweichungen durch Alterung des Leiterbahnmaterials bzw. durch fertigungsbedingte Toleranzen.

Die Temperatur der Leiterbahn ist identisch mit der Temperatur der angrenzenden Glaskeramik: TLB = TGK . Bei der Kalibrierung wird daher gemäß der Erfindung bei einer Temperatur zwischen 250 °C und 600 °C dem gemessenen Leiterbahnwiderstand $R_{LB}$ die mit einem Glaskeramik-Sensor gemessene Temperatur zugeordnet.

Bei ausreichend konstantem $\alpha_{20}$ kann aus (3) der genaue Wert $R_{20}$ bestimmt werden. Mit diesem korrigierten $R_{20}$ kann jetzt aus (4) über den gesamten interessierenden Temperaturbereich von Raumtemperatur bis 600 °C aus $R_{LB}$ ein exakter Wert der Temperatur der Kochzone bestimmt werden.

Falls der Widerstandsbeiwert $\alpha_{20}$ den Genauigkeitsanforderungen nicht genügt, wird in Erweiterung des geschilderten Verfahrens die Kalibrierung bei zwei Temperaturen über 250 °C vorgenommen. Aus den vorliegenden Werten wird ein Gleichungssystem für $R_{20}$ und $\alpha_{20}$ gelöst.

Ist der Widerstand wie in (5) nicht linear von der Temperatur abhängig, muß der Abgleich an mehreren Temperaturwerten erfolgen, so daß die Unbekannten bestimmt werden können.

Der Abgleich kann bei jedem Überschreiten von einer Temperatur von 250 °C oder auch nur periodisch in größeren Zeitabständen oder bei besonderen Betriebsbedingungen (z. B. Betrieb der Kochzone ohne Geschirr) erfolgen. Die Kalibrierung kann beispielsweise dann durchgeführt werden, wenn die Abweichung der Temperaturmessung auf Basis des Trägermaterials und der auf Basis des Leiterbahnwiderstandes mehr als 5 °C beträgt. Erfahrungsgemäß reicht eine Kalibrierung nach jeweils 10 Betriebsstunden aus, um eine ausreichende Meßgenauigkeit zu gewährleisten. Da der Abgleich in ca. 1 Sekunde durchführbar ist, stellt dies keine wesentliche Behinderung des Betriebes dar. Die Kalibrierung bei Betrieb der Kochzone ohne Geschirr hat den Vorteil, daß die Wärmeabfuhr und damit das Temperaturprofil der Kochzone sehr genau definiert sind. Dies verbessert die Genauigkeit der Kalibrierung.

Nachfolgend wird anhand eines Ausführungsbeispiels das erfindungsgemäße Verfahren näher erläutert:

Als Temperatursensoren wurden zwei im Abstand von ca. 3 mm parallel verlaufende Goldleiterbahnen mit einer Länge von 180 mm auf einer Glaskeramik verwendet. Gemessen wurde der elektrische Widerstand entlang einer Leiterbahn und der Glaskeramikwiderstand zwischen den Leiterbahnen. Beide Werte wurden der jeweiligen, mit einem separaten Temperaturfühler (Pt 100) ermittelten Glaskeramiktemperatur an einer Stelle der Glaskeramik zugeordnet.

Für den Leiterbahnwiderstand wurden vor und nach einer Alterung über 2000 Stunden bei ca. 600 °C folgende Wertepaare gemessen und die zugehörigen Temperaturkoeffizienten des elektrischen Widerstandes $\alpha_{20}$ berechnet:

| | "$T_{kalt}$" | $R_{20}$ | $T_{LB}$ | $R_{LB}$ | $\alpha_{20}$ |
|---|---|---|---|---|---|
| **Neuzustand** | 20 °C | 14 Ω | 400 °C | 26,77 | 2,4x10$^{-3}$K |
| **nach Alterung** | 20 °C | 15 Ω | 400 °C | 28,68 | 2,4x10$^{-3}$K |

Der berechnete Temperaturkoeffizient $\alpha_{20}$ ist spezifisch für den verwendeten Meßaufbau und das zugehörige Temperaturprofil über die Leiterbahnlänge; er erweist sich bei Alterung als weitestgehend stabil.

Nach der Alterung wird der Widerstand von 26,77 Ω gemäß Gleichung (4) bereits bei der Temperatur von 347 °C erreicht. Ohne Kalibrierung ermittelt der Leiterbahnsensor jedoch eine Temperatur von 400 °C.

Erfindungsgemäß kann jetzt, z.B. bei 400 °C, ein Temperaturabgleich mit dem Glaskeramiksensor mit einer Genauigkeit von ± 3 °C durchgeführt werden.

Bei konstantem $\alpha_{20}$ und ausreichend genauer Widerstandsmessung ergibt sich mit Gl. (3) der neue Kaltwiderstand mit einer Genauigkeit gemäß Gleichung (6) von $R_{20} = 15\Omega \pm 0,06\Omega$. Dabei entspricht $\Delta T_{LB} = \Delta T_{GK}$ und $T_{LB} = T_{GK}$.

$$(6) \quad \Delta R_{20} = \pm \left| -R_{LB} \cdot \alpha_{20}/(1+\alpha_{20} \cdot T_{LB} - \alpha_{20} \cdot 20)^2 \right| \cdot \Delta T_{LB}$$

Mit diesem neuen $R_{20} \pm \Delta R_{20}$ kann jetzt gemäß Gl. (4) die Temperatur, z.B. bei 50 °C entsprechend $R_{LB} = 16,08\ \Omega$, mit Hilfe des Leiterbahnwiderstandes mit einer Genauigkeit gemäß Gleichung (7) von $\Delta T_{LB} = \pm 1,8\,°C$ bestimmt werden.

$$(7) \quad \Delta T_{LB} = \pm \left| -R_{LB} / (\alpha_{20} \cdot R_{20}^2) \right| \cdot \Delta R_{20}$$

Ohne Kalibrierung nach der Alterung würde hingegen bei 50 °C entsprechend 16,08 Ω gemäß Gleichung (4) eine Temperatur von 82 °C angezeigt werden.

Das erfindungsgemäße Verfahren hat den Vorteil, daß mit relativ geringem apparativem Aufbau auch über lange Betriebszeiten eine sehr genaue Temperaturbestimmung möglich ist. So kann z. B. im Falle der Glaskeramikkochflächen in der Praxis eine Leiterbahnanordnung gewählt werden, wie sie aus dem oben beschriebenen Stand der Technik bekannt ist. Es ist hierzu lediglich erforderlich, einen der beiden parallelen Leiterbahnstreifen zur Bestimmung des Leiterbahntemperaturmeßwiderstandes an beiden Enden zu kontaktieren. Zwischen den beiden Leiterbahnen befindet sich der streifenförmige Glaskeramiktemperaturmeßwiderstand, der von beiden Leiterbahnen begrenzt und kontaktiert und zur Bestimmung der tatsächlichen Temperatur der Kochfläche herangezogen wird.

## Patentansprüche

**1.** Verfahren zum Kalibrieren von Temperaturmeßwiderständen auf Trägern aus Glas, Glaskeramik, technischer Keramik oder Kristall, insbesondere von Leiterbahnwiderständen auf Kochflächen aus Glaskeramik,

**dadurch gekennzeichnet,**

**daß** zur Bestimmung der Temperatur-Widerstands-Charakteristik des Temperaturmeßwiderstandes die einem gemessenen Widerstandswert zugeordnete Temperatur über den temperaturabhängigen elektrischen Widerstand des Trägermaterials ermittelt wird.

2. Verfahren nach Anspruch 1,
**dadurch gekennzeichnet,**
**daß** die Kalibrierung bei Temperaturen zwischen 250 °C und 600 °C durchgeführt wird.

3. Verfahren nach Anspruch 1 oder 2,
**dadurch gekennzeichnet,**
**daß** die Kalibrierung durchgeführt wird, wenn die Abweichung der Temperaturmessung auf Basis des Trägermaterials und der auf Basis des Leiterbahnwiderstands mehr als 5 °C beträgt.

4. Verfahren nach Anspruch 1 oder 2,
**dadurch gekennzeichnet,**
**daß** die Kalibrierung nach jeweils 10 Betriebsstunden durchgeführt wird.

5. Verfahren nach wenigstens einem der Ansprüche 1 bis 4,
**dadurch gekennzeichnet,**
**daß** zum Kalibrieren die Temperatur über den elektrischen Widerstand des unmittelbar an den Temperaturmeßwiderstand angrenzenden Trägermaterials bestimmt wird.

6. Verfahren nach Anspruch 5,
**dadurch gekennzeichnet,**
**daß** der zu kalibrierende Temperaturmeßwiderstand eine Leiterbahn auf dem Träger ist und daß dieser Leiterbahn eine zweite Leiterbahn zugeordnet ist, welche zusammen mit der ersten Leiterbahn auf dem Träger einen Temperaturmeßwiderstand aus dem Trägermaterial begrenzt und kontaktiert, und daß dieser Temperaturmeßwiderstand zur Bestimmung der Temperatur herangezogen wird.

7. Verfahren nach wenigstens einem der Ansprüche 1 bis 6,
**dadurch gekennzeichnet,**
**daß** bei bekanntem mathematischen Zusammenhang zwischen dem zu kalibrierenden Temperaturmeßwiderstand und der Temperatur die Zahl der Kalibriermeßpunkte entsprechend der Zahl der unbekannten Größen in der entsprechenden mathematischen Gleichung gewählt wird.

8. Verfahren nach Anspruch 7,
**dadurch gekennzeichnet,**
**daß** bei linearer Temperatur-Widerstands-Charakteristik des zu kalibrierenden Temperaturmeßwiderstandes bei ausreichend konstantem Widerstandsbeiwert $\alpha_{20}$ die Kalibriermessung nur bei einer Temperatur > 250 °C durchgeführt wird.

**Claims**

1. Method for calibrating temperature-measuring resistors on substrates made from glass, glass ceramic, technical ceramic or crystal, in particular conductor track resistors on cooking areas made from glass ceramic, **characterized in that** in order to determine the temperature/resistance characteristic of the temperature-measuring resistor the temperature assigned to a measured resistance value is determined via the temperature-dependent electric resistance of the substrate material.

2. Method according to Claim 1, **characterized in that** the calibration is carried out at temperature of between 250°C and 600°C.

3. Method according to Claim 1 or 2, **characterized in that** the calibration is carried out when the deviation of the temperature measurements on the basis of the carrier material and on the basis of the conductor track resistance is more than 5°C.

**4.** Method according to Claim 1 or 2, **characterized in that** the calibration is carried out after 10 operating hours in each case.

**5.** Method according to at least one of Claims 1 to 4, **characterized in that** for the purpose of calibration the temperature is determined via the electric resistance of the substrate material directly adjoining the temperature-measuring resistor.

**6.** Method according to Claim 5, **characterized in that** the temperature-measuring resistor is a conductor track on the substrate, and **in that** this conductor track is assigned a second conductor track which together with the first conductor track delimits on the substrate a temperature-measuring resistor made from the substrate material, and **in that** this temperature-measuring resistor is used to determine the temperature.

**7.** Method according to at least one of Claims 1 to 6, **characterized in that** given a known mathematical relationship between the temperature-measuring resistor to be calibrated and the temperature, the number of the calibration points is selected in accordance with the number of the unknown variables in the corresponding mathematical equation.

**8.** Method according to Claim 7, **characterized in that** given a linear temperature/resistance characteristic of the temperature-measuring resistor to be calibrated, the calibration measurement is carried out only at a temperature >250°C given a satisfactorily constant resistance coefficient $\alpha_{20}$.

**Revendications**

**1.** Procédé pour étalonner des résistances de mesure de la température sur des supports en verre, en vitrocéramique, en céramique technique ou en cristal, en particulier pour étalonner des résistances de pistes conductrices de surfaces de cuisson en vitrocéramique,
**caractérisé en ce que** pour déterminer la relation entre la résistance et la température de la résistance de mesure de la température, on détermine la température associée à une valeur de résistance mesurée au moyen de la résistance électrique du matériau de support, qui dépend de la température.

**2.** Procédé selon la revendication 1, **caractérisé en ce que** l'étalonnage est effectué à des températures comprises entre 250 et 600°C.

**3.** Procédé selon la revendication 1 ou la revendication 2, **caractérisé en ce que** l'étalonnage est effectué si la mesure de la température sur le matériau de support et celle sur la résistance de piste conductrice présentent une différence de plus de 5°C.

**4.** Procédé selon la revendication 1 ou la revendication 2, **caractérisé en ce que** l'étalonnage est effectué toutes les 10 heures de fonctionnement.

**5.** Procédé selon au moins l'une des revendications 1 à 4, **caractérisé en ce que**, pour l'étalonnage, on détermine la température au moyen de la résistance électrique du matériau de support en un emplacement directement contigu à la résistance de mesure de la température.

**6.** Procédé selon la revendication 5, **caractérisé en ce que** la résistance de mesure de la température à étalonner est une piste conductrice située sur le support, **en ce qu'**une deuxième piste conductrice est associée à cette dernière et, en association avec la première piste conductrice et sur le support, délimite et relie une résistance de mesure de la température formée du matériau de support et **en ce que** l'on utilise cette résistance de mesure de la température pour déterminer la température.

**7.** Procédé selon au moins l'une des revendications 1 à 6, **caractérisé en ce que**, dans le cas où il existe une relation mathématique connue entre la résistance de mesure de la température à étalonner et la température, on sélectionne le nombre de points de mesure d'étalonnage qui correspond au nombre de grandeurs inconnues dans l'équation mathématique correspondante.

**8.** Procédé selon la revendication 7, **caractérisé en ce que** lorsque la relation entre la résistance et la température de la résistance de mesure de la température à étalonner est linéaire, on n'effectue la mesure d'étalonnage qu'à une température > 250°C si le coefficient de résistance $\alpha_{20}$ est suffisamment constant.